# EUROPEAN PATENT SPECIFICATION

(11) **EP 3 034 676 B1**
(45) Date of publication and mention of the grant of the patent: **14.03.2018**
(21) Application number: 13891626.7
(22) Date of filing: 18.12.2013
(51) Int. Cl.: D06F 39/08

(54) **WASHING MACHINE WITH CIRCULATED WATER TREATMENT FUNCTION AND CONTROL METHOD THEREFOR**
WASCHMASCHINE MIT FUNKTION ZUR BEHANDLUNG VON ZIRKULIERTEM WASSER UND STEUERUNGSVERFAHREN DAFÜR
MACHINE À LAVER DOTÉE D'UNE FONCTION DE TRAITEMENT D'EAU CIRCULÉE ET SON PROCÉDÉ DE COMMANDE

(30) Priority: 15.08.2013 CN 201310356428
(43) Date of publication of application: 22.06.2016
(73) Proprietor: Haier Group Corporation, Shandong 266101 (CN); Qingdao Haier Washing Machine Co., Ltd., Shandong 266101 (CN)
(72) Inventor: XU, Sheng, Qingdao Shandong 266101 (CN); DENG, Jinzhu, Qingdao Shandong 266101 (CN)
(74) Representative: Ziebig, Marlene
(86) International application number: PCT/CN2013/089803
(87) International publication number: WO 2015/021722

(56) References cited:
- CN-A- 1 312 409
- CN-Y- 2 639 369
- CN-Y- 2 639 369
- JP-A- 2001 054 700
- JP-A- 2001 113 090

## Description

### FIELD OF THE INVENTION

The present invention relates to the field of washing machines, specifically to a circulated water-saving washing machine, and particularly to a washing machine with a circulated water treatment function and a control method therefor.

### BACKGROUND OF THE INVENTION

With improvement of people's living standard, the washing machine has become one of main household appliances in people's daily life, the washing process of the washing machine mainly includes washing, rinsing and spin-dry stages, in the washing stage, water and detergent flood in the washing machine to wash clothes, after the washing machine enters the rinsing stage, in order to rinse stains and residual detergents, it is necessary to take in more water or perform more rinsing times to rinse the clothes, this will definitely consume a large number of water resources, even if it is a water-saving roller washing machine, in order to clean the clothes, the clothes needs to be rinsed at least twice, and such a process will at least consume more than 30 L of running water. Sometimes, there are fewer stains on the clothes or fewer detergents are dispensed into, the clothes may be clean after twice-rinsing, however, as the user selects 3-times rinsing, it will definitely cause a waste of water resources, for example, generally, during twice-rinsing of a 6Kg full automatic washing machine, about 100 L of water is basically used. How to save water and electricity while the clothes is cleaned is always one of the focuses of consumers.

So far, a water purification and recycling device used in conjunction with a household washing machine has not yet appeared, even if the so-called washing machine with a water saving function, a water storage tank is generally mounted to a side position of the washing position, and a water pump is used for injecting water and draining water, which generally can inject water once and rinse the clothes three times, to play a role of saving water. However, the water after washing cannot be stored; at the same time, the structure of the washing machine is complicated and large, which is not conductive to transportation, recycling and so on. Due to limitations in the volume, structure, flexibility and other aspects, full play of the original function of the washing machine and the function of the water saving tank is affected. On the basis of the existing washing modes, in order to better save the water resources, many manufacturers have invested a lot of research and development.

The existing washing machine has a circulated water function, which merely plays a role of filtering threads, washing evenly or adding ozone, heavy metal ion sterilization and the like. The amount of water consumed cannot be improved, and the cleaning is not improved at all.

Regarding recycling of the laundry water, upon reference, the related patent document, for example, "water saving device for recycled water of washing machine" with Application Number of 200810072420.5, the laundry water is dispensed into a water drum for purification treatment. In the invention, the first-pass laundry water is directly drained away without purification, and the second-pass and third-pass rinse water, after purification treatment, is left for use in next washing.

In the above technology, the "circulated water technology" is used after the rinse water is purified, the technology cannot recycle the first-pass laundry water (rough cleaning water), and the purified water should be left for use in next washing, but cannot be used in the current washing.

In view of this, the present invention is proposed.

CN 2 639 369 Y discloses a water-saving washing machine. A preliminary filtration device is provided in front of a water outlet of a washing barrel. A water storage barrel is also provided with a flocculation basin on the bottom; a filtration device is arranged above the flocculation basin. The flocculation basin connects with the washing barrel through a piping. The flocculation basin is also provided with a blow down port. A pump is connected with the piping. A waste water discharge port is also provided connecting with the washing barrel. A medicine charging port is provided on the upstream pipe line of the pump. A check valve is arranged on the downstream of the pump. A water level controller matching with the pump is provided inside the water storage barrel.

### SUMMARY OF THE INVENTION

A technical problem to be solved in the present invention is to provide a washing machine that is water-saving by having a circulated water treatment function that filters wash and rinse water by using flocculation, so as to overcome the shortcomings of the prior art.

Another objective of the present invention is to provide a control method of the water-saving washing machine.

These objectives are achieved by a washing machine according to independent claim 1 and a control method of the washing machine according to claim 10. Further improvements and embodiments are provided in the dependent claims.

A first aspect of the invention relates to a washing machine having a circulated water treatment function, including a water holding barrel, a washing structure disposed in the water holding barrel and a circulated water treatment device disposed below the water holding barrel, wherein the circulated water treatment device includes a flocculation treatment unit and a filtering unit.

According to the invention, the flocculation treatment unit includes a flocculation container in communication with the water holding barrel and a flocculant dispenser through which a flocculant is dispensed into the flocculation container, and the water holding barrel drains water via an outlet control valve into the flocculation container for flocculation treatment; and
the filtering unit includes a filtering container and a strainer disposed in the filtering container, the interior of the filtering container is divided into a first part and a second part by the strainer, the first part is in communication with the flocculation container through a connecting pipe, and the second part is in communication with the water holding barrel through a circulated water structure, and the water after flocculation treatment in the flocculation container is filtered and then re-drained into the water holding barrel for reuse, wherein the circulated water structure is comprised by the circulated water treatment device and drains the water after flocculation and filtering into the water holding barrel for recycling.

Further, the circulated water treatment device includes a drainage structure that drains the water outside the washing machine at the end of work.

Further, a lower portion of the flocculation container and a lower portion of the filtering container control connection/disconnection between the two containers through an on-off control structure, an upper portion of the flocculation container is in communication with a water outlet at the bottom of the water holding barrel through a water guide pipe, and the water guide pipe is provided with an outlet control valve.

Further, the flocculation container and the filtering container are separately arranged side by side below the water holding barrel, and are communicated through a connecting pipe, and the connecting pipe is provided with a stop valve to control connection/disconnection between the two containers; or, the filtering container is disposed inside the flocculation container, a chamber between the filtering container and the flocculation container is used for flocculating water, a lower portion of the filtering container is provided with a port, and the port is provided with an on-off control structure that controls connection/disconnection between the two containers.

Further, the bottom of the flocculation container is provided with a drainage structure that drains water outside the washing machine, including a flocculation container drain outlet, a drain pipe and a drain valve in communication with the drain outlet.

Further, the filtering container is provided with a circulated water structure that drains filtered water into the water holding barrel, including a filtering container circulated water outlet, a circulating pump and a circulating pipe, the circulating pipe is in communication with the water holding barrel, the strainer divides the interior of the filtering container into two parts, the first part is in communication with the flocculation container, and the second part is in communication with the water holding barrel through the circulated water structure.

Further, the flocculation container is disposed above the filtering container, the bottom of the flocculation container is in communication with the upper portion of the filtering container through a connecting pipe, the connecting pipe is provided with a stop valve, the upper portion of the flocculation container is in communication with a water outlet at the bottom of the water holding barrel through a water guide pipe, and the water guide pipe is provided with an outlet control valve.

Further, the bottom of the filtering container is provided with a drainage structure that drains water outside the washing machine and a circulated water structure that drains filtered water into the water holding barrel, the strainer divides the interior of the filtering container into two parts, the first part is in communication with the connecting pipe and the drainage structure respectively, and the second part is in communication with the water holding barrel through the circulated water structure .

Further, the flocculation treatment unit further includes a flocculation stirring structure that mainly consists of a stirring motor, a stirring shaft and a stirring impeller, the stirring motor is disposed outside the flocculation container, the stirring shaft extends to the interior of the flocculation container from the stirring motor, and the stirring impeller is disposed on the stirring shaft inside the flocculation container.

Further, the strainer is a tubular structure and rotatably disposed in the filtering container, one end is driven and connected through a cleaning motor, and the other drains the filtered water into the water holding barrel through a rotating joint.

A second aspect of the invention concerns a control method of the above described washing machine of the present invention, comprising the following steps: after washing ends, water is drained to the circulated water treatment device, passes through the flocculation treatment unit for flocculation treatment and the filtering unit for filtering in sequence, and then is drained into the water holding barrel for rinsing, the water treatment process is circulated until the rinsing ends, and the water is drained into the circulated water treatment device to be cleaned through the flocculation treatment unit and the filtering unit and is finally drained out.

Further, the washing machine of the present invention further includes an automatic detergent dispensing device, the automatic detergent dispensing device is the existing technology, preferably a structure that pumps and dispenses detergent by using intake negative pressure; the flocculant dispenser of the present invention is an automatic dispensing structure, and according to wash water quantity and the turbidity degree of wash/rinse water, a corresponding proportion of flocculant is automatically dispensed during each flocculation treatment; preferably, the flocculant is flaky, and it is feasible to employ an automatic dispensing structure of the existing flaky flocculant.

Further, in the present invention, whether flocculation treatment is required is judged according to the turbidity degree of the wash water detected after washing, when the turbidity degree is higher, the wash water can be directly drained out completely, clean water floods in again for rinsing, and after first rinsing, flocculation circulation rinsing is carried out with water; or a certain proportion of wash water is drained out according to the range of the turbidity degree, then tap water floods in to reduce the turbidity degree, and flocculation circulation rinsing is carried out with water.

After the foregoing technical solution is adopted, the present invention has the following beneficial effects compared with the prior art.
1. After the washing ends, the water in the water holding barrel is clean water, and the clothes does not have the problem that the washing powder remains or the clothes is not cleaned, which is conductive to user's health.
2. According to the present invention, the whole washing process can be completed only with one-time intake, which saves water resources to the greatest extent while the washing efficiency is not affected.
3. As the water of the washing machine drained out after washing basically does not contain the washing powder or detergent, the pollution to the environment can be reduced.

### BRIEF DESCRIPTION OF THE DRAWINGS

FIG. 1 and FIG. 2 are schematic structural diagrams of the washing machine according to a first embodiment of the present invention;
FIG. 3 and FIG. 4 are schematic structural diagrams of the washing machine according to a second embodiment of the present invention;
FIG. 5 and FIG. 6 are schematic structural diagrams of the washing machine according to a third embodiment of the present invention;
FIG. 7 is a schematic structural diagram of the washing machine according to a fourth embodiment and a fifth embodiment of the present invention; and
FIG. 8 is a schematic structural diagram of the washing machine according to the fifth embodiment of the present invention.

### DETAILED DESCRIPTION OF THE INVENTION

Specific embodiments of the present invention are further described below in detail with reference to the accompanying drawings.

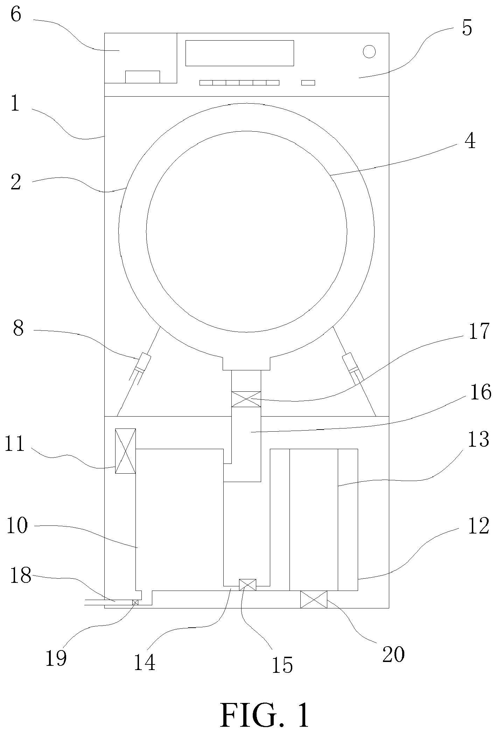

As shown in FIG. 1 to FIG. 8, according to the washing machine of the present invention, an upper portion is the existing washing machine structure, a lower portion is a circulated water treatment device, the washing machine includes a housing 1, an outer drum 2 disposed in the housing 1, an inner drum disposed in the outer drum 2, a door body 4, a control panel 5, an intake system 6 and a drive motor 7, the bottom and an upper portion of the outer drum 2 are connected with the frame of the housing respectively through a damper 8 and a suspension spring 9, and the intake system 6 includes an intake structure and an automatic detergent dispensing device. The outer drum 2 is a water holding barrel, and the inner drum 3 disposed in the outer drum is a washing structure.

The circulated water treatment device of the present invention includes a flocculation treatment unit and a filtering unit, wherein the flocculation treatment unit includes a flocculation container 10 in communication with the outer drum and a flocculant dispenser 11 through which a flocculant is dispensed into the flocculation container 10, and the outer drum 2 drains water into the flocculation container 10 for flocculation treatment; and the filtering unit includes a filtering container 12 and a strainer 13 disposed in the filtering container 12, the filtering container 12 is in communication with the flocculation container 10 and the outer drum 2 respectively, and the water after flocculation treatment in the flocculation container 10 is filtered and then re-drained into the outer drum 2 for reuse.

Further, the circulated water treatment device further includes a circulated water structure that drains the water after flocculation and filtering into the outer drum 2 for recycling, and a drainage structure that drains the water outside the washing machine at the end of work. After a certain number of times of flocculation and filtering circulation are carried out to complete the final rinsing, the clean water in the outer drum is drained to the circulated water treatment device for re-cleaning the flocculation container and the strainer, and then the water after cleaning is drained out.

### First embodiment

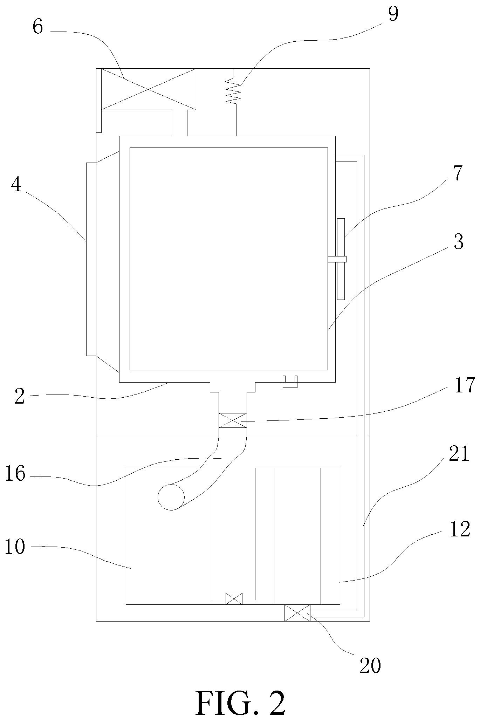

As shown in FIG. 1 and FIG. 2, the flocculation container 10 and the filtering container 12 of this embodiment are arranged side by side below the outer drum 2, a lower portion of the flocculation container 10 and a lower portion of the filtering container 12 through a connecting pipe 14, and the connecting pipe 14 is provided with a stop valve 15 to control connection/disconnection between the two containers. An upper portion of the flocculation container 10 is in communication with a water outlet at the bottom of the outer drum 2 through a water guide pipe 16, and the water guide pipe 16 is provided with an outlet control valve 17. The bottom of the flocculation container 10 is provided with a drainage structure that drains water outside the washing machine, including a flocculation container drain outlet, a drain pipe 18 and a drain valve 19 in communication with the drain outlet.

Further, the filtering container 12 is provided with a circulated water structure that drains filtered water into the outer drum 2, including a filtering container circulated water outlet, a circulating pump 20 and a circulating pipe 21, the circulating pipe 21 is in communication with the outer drum 2, the strainer 13 divides the interior of the filtering container 12 into two parts, the first part is in communication with the flocculation container 10 through the connecting pipe 14, and the second part is in communication with the outer drum 2 through the circulated water structure.

### Second embodiment

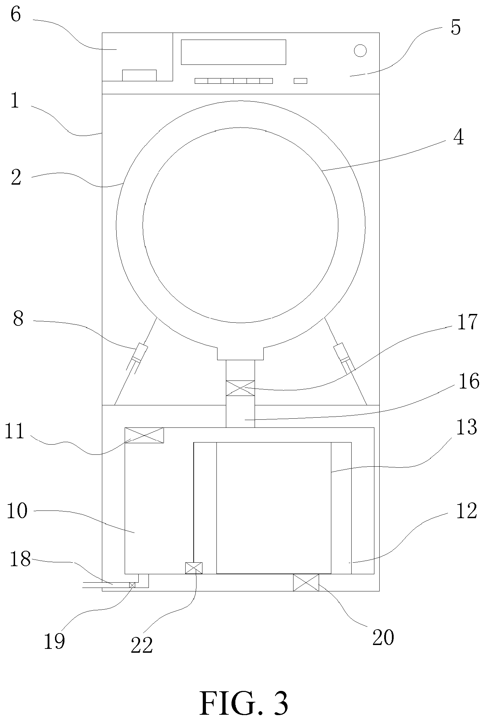

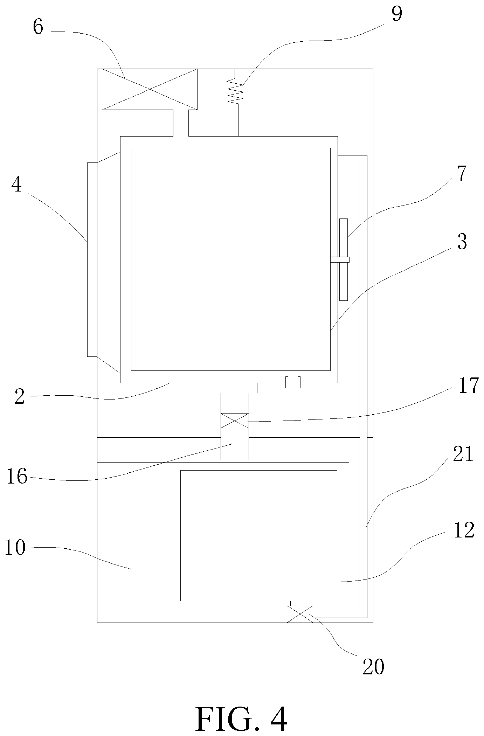

As shown in FIG. 3 and FIG. 4, this embodiment is different the first embodiment in that: the filtering container 12 is disposed inside the flocculation container 10, a chamber between the filtering container 12 and the flocculation container 10 is used for flocculating water, a lower portion of the filtering container 12 is provided with a port, and the port is provided with an on-off control structure 22 that controls connection/disconnection between the two containers.

### Embodiment 3

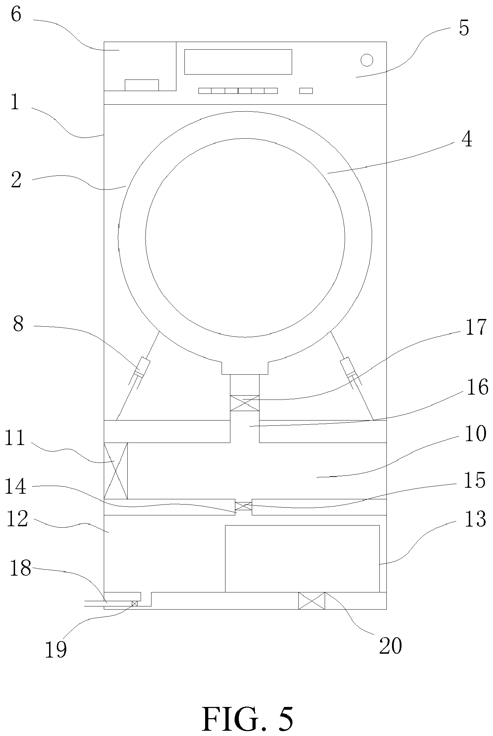

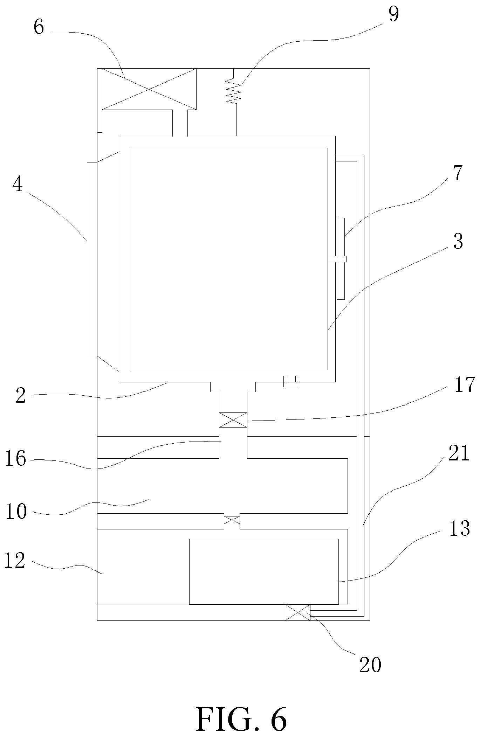

As shown in FIG. 5 and FIG. 6, the flocculation container 10 of this embodiment is disposed above the filtering container 12, the bottom of the flocculation container 10 is in communication with the upper portion of the filtering container 12 through a connecting pipe 14, the connecting pipe 14 is provided with a stop valve 15, the upper portion of the flocculation container 10 is in communication with a water outlet at the bottom of the outer drum through a water guide pipe 16, and the water guide pipe 16 is provided with an outlet control valve 17.

The bottom of the filtering container 12 is provided with a drainage structure that drains water outside the washing machine and a circulated water structure that drains filtered water into the outer drum 2, the strainer 13 divides the interior of the filtering container 12 into two parts, the first part is in communication with the connecting pipe 14 and the drainage structure respectively, and the second part is in communication with the outer drum 2 through the circulated water structure.

### Embodiment 4

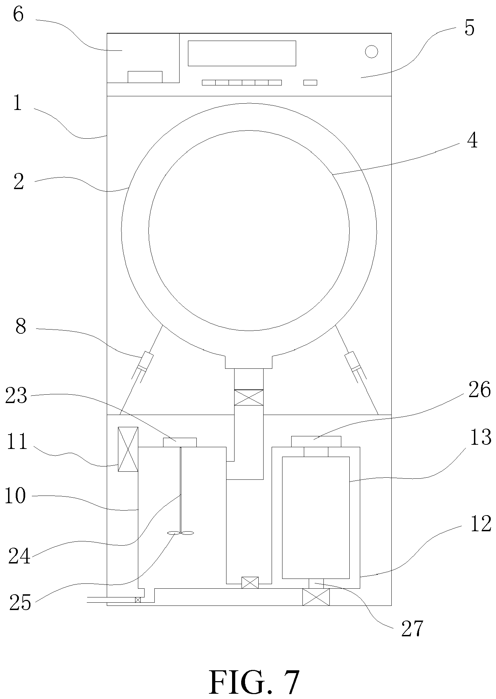

As shown in FIG. 7, this embodiment makes further improvement on the basis of the above embodiment: the flocculation treatment unit further includes a flocculation stirring structure that mainly consists of a stirring motor 23, a stirring shaft 24 and a stirring impeller 25, the stirring motor 23 is disposed outside the flocculation container 10, the stirring shaft 24 extends to the interior of the flocculation container 10 from the stirring motor 23, and the stirring impeller 25 is disposed on the stirring shaft 24 inside the flocculation container 10.

### Fifth embodiment

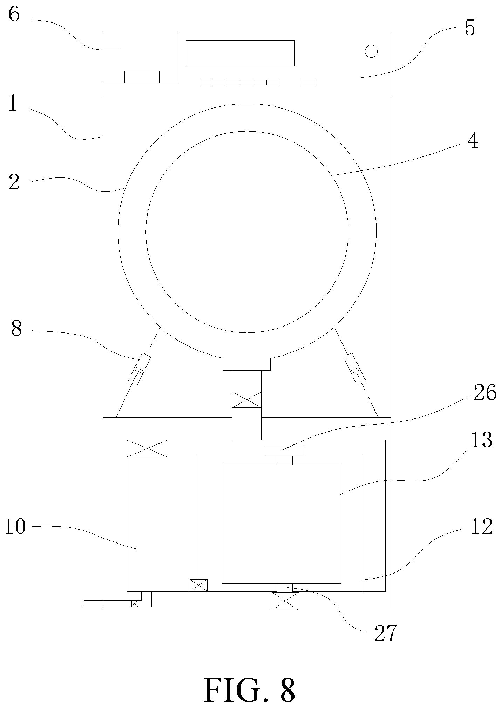

As shown in FIG. 7 and FIG. 8, this embodiment makes further improvement on the basis of the above embodiment: the strainer 13 is a tubular structure and rotatably disposed in the filtering container 12, one end is driven and connected through a cleaning motor 26, and the other drains the filtered water into the outer drum 2 through a rotating joint 27.

### Sixth embodiment

A control method of the washing machine of the present invention is: after washing ends, water is drained to the circulated water treatment device, passes through the flocculation treatment unit for flocculation treatment and the filtering unit for filtering in sequence, and then is drained into the outer drum 2 for rinsing, the water treatment process is circulated until the rinsing ends, and the water is drained into the circulated water treatment device to be cleaned through the flocculation treatment unit and the filtering unit and is finally drained out.

### Specifically,

### Washing

After selection of a required washing procedure and a flocculation treatment function, a start button is pressed down, water floods in the washing machine to a set intake amount, the motor drives the inner drum to rotate, and the washing starts.

### Flocculation

After the washing ends, the outlet control valve is opened, to drain dirty wash water into the flocculation container. A main control panel adds a certain amount of flocculate into the flocculation container through a flocculant dispenser according to a set program, after standing for a period of time, the flocculate will condense dirt in the flocculation container into large particles to float in the container, and the bottom is treated clean water.

### Filter

After the flocculation ends, the stop valve/on-off control structure is opened, the clean water in the flocculation container will enter into the filtering container, the strainer in the filtering container will block the flocculate and the dirt outside the strainer, and the clean water will be driven by the circulating pump at the bottom into the outer drum 2 again to continue the rinsing.

### Circulation

The flocculation and filter processes are repeated once to three times, and stop until a turbidity sensor detects that the wash water in the outer drum 2 has become clean. Alternatively, according to experimental data, a fixed number of times of circulation can also achieve a better effect.

### Cleaning and drainage

After circulated treatment of water ends, the water in the outer drum 2 is drained into the flocculation container once again, at the same time, the stop valve/on-off control structure is opened to make some water flood into the filtering container to clean the strainer, and finally the drain valve is opened to drain flocculated sewage, sewage on the strainer, threads and water outside the washing machine.

### Seventh embodiment

According to the present invention, whether flocculation treatment is required is judged according to the turbidity degree of the wash water detected after washing, when the turbidity degree is higher, the wash water can be directly drained out completely, clean water floods in again for rinsing, and after first rinsing, flocculation circulation rinsing is carried out with water; or a certain proportion of wash water is drained out according to the range of the turbidity degree, then tap water floods in to reduce the turbidity degree, and flocculation circulation rinsing is carried out with water.

The washing machine of the present invention further includes an automatic detergent dispensing device, the automatic detergent dispensing device is the existing technology, preferably a structure that pumps and dispenses detergent by using intake negative pressure; the flocculant dispenser of the present invention is an automatic dispensing structure, and according to wash water quantity and the turbidity degree of wash/rinse water, a corresponding proportion of flocculant is automatically dispensed during each flocculation treatment; preferably, the flocculant is flaky, and it is feasible to employ an automatic dispensing structure of the existing flaky flocculant.

The implementation solutions in the above embodiments can be further combined or replaced, and the embodiments merely describe preferred embodiments of the present invention, instead of limiting the concept and the scope of the present invention; without departing from the design concept of the present invention, various variations and improvements made to the technical solutions of the present invention by persons skilled in the art all belong to the protection scope of the present invention.

## Claims

1. A washing machine having a circulated water treatment function, comprising a water holding barrel (2), a washing structure disposed in the water holding barrel (2) and a circulated water treatment device disposed below the water holding barrel (2), the circulated water treatment device comprises a flocculation treatment unit and a filtering unit, **characterized in that**,
the flocculation treatment unit comprises a flocculation container (10) in communication with the water holding barrel (2) and a flocculant dispenser (11) through which a flocculant is dispensed into the flocculation container (10), and the water holding barrel (2) drains water via an outlet control valve (17) into the flocculation container (10) for flocculation treatment; and
the filtering unit comprises a filtering container (12) and a strainer (13) disposed in the filtering container (12), the interior of the filtering container (12) is divided into a first part and a second part by the strainer (13), the first part is in communication with the flocculation container (10) through a connecting pipe (14), and the second part is in communication with the water holding barrel (2) through a circulated water structure, and the water after flocculation treatment in the flocculation container (10) is filtered and then re-drained into the water holding barrel (2) for reuse;
wherein the circulated water structure is comprised by the circulated water treatment device and drains the water after flocculation and filtering into the water holding barrel (2) for recycling.

2. The washing machine having a circulated water treatment function according to claim 1, wherein the circulated water treatment device comprises a drainage structure that drains the water outside the washing machine at the end of work.

3. The washing machine having a circulated water treatment function according to claim 1, wherein a lower portion of the flocculation container (10) and a lower portion of the filtering container (12) control connection/disconnection between the two containers through an on-off control structure (22), an upper portion of the flocculation container (10) is in communication with a water outlet at the bottom of the water holding barrel (2) through a water guide pipe (16), and the water guide pipe (16) is provided with the outlet control valve (17).

4. The washing machine having a circulated water treatment function according to claim 3, wherein the bottom of the flocculation container (10) is provided with the drainage structure that drains water outside the washing machine, comprising a flocculation container (10) drain outlet, a drain pipe (18) and a drain valve (19) in communication with the drain outlet.

5. The washing machine having a circulated water treatment function according to claim 3, wherein the filtering container (12) is provided with the circulated water structure that drains filtered water into the water holding barrel (2), including a filtering container circulated water outlet, a circulating pump (20) and a circulating pipe (21), the circulating pipe (21) is in communication with the water holding barrel (2), the strainer (13) divides the interior of the filtering container (12) into two parts that are the first part and second part, with the first part being in communication with the flocculation container (10), and the second part being in communication with the water holding barrel (2) through the circulated water structure.

6. The washing machine having a circulated water treatment function according to claim 1, wherein the flocculation container (10) is disposed above the filtering container (12), the bottom of the flocculation container (10) is in communication with the upper portion of the filtering container (12) through the connecting pipe (14), the connecting pipe (14) is provided with a stop valve (15), the upper portion of the flocculation container (10) is in communication with a water outlet at the bottom of the water holding barrel (2) through a water guide pipe (16), and the water guide pipe (16) is provided with the outlet control valve (17).

7. The washing machine having a circulated water treatment function according to claim 6, wherein the bottom of the filtering container (12) is provided with a drainage structure that drains water outside the washing machine and the circulated water structure that drains filtered water into the water holding barrel (2), the strainer (13) divides the interior of the filtering container (12) into two parts that are the first part and second part, with the first part being in communication with the connecting pipe (14) and the drainage structure respectively, and the second part being in communication with the water holding barrel (2) through the circulated water structure .

8. The washing machine having a circulated water treatment function according to any one of claims 1 to 7, wherein the flocculation treatment unit further comprises a flocculation stirring structure that mainly consists of a stirring motor (23), a stirring shaft (24) and a stirring impeller (25), the stirring motor (23) is disposed outside the flocculation container (10), the stirring shaft (24) extends to the interior of the flocculation container (10) from the stirring motor (23), and the stirring impeller (25) is disposed on the stirring shaft (24) inside the flocculation container (10).

9. The washing machine having a circulated water treatment function according to any one of claims 1 to 7, wherein the strainer (13) is a tubular structure and rotatably disposed in the filtering container (12), one end is driven and connected through a cleaning motor (26), and the other drains the filtered water into the water holding barrel (2) through a rotating joint (27).

10. A control method of the washing machine according to any one of claims 1 to 9, **characterized in that**, after washing ends, water is drained to the circulated water treatment device, passes through the flocculation treatment unit for flocculation treatment and the filtering unit for filtering in sequence, and then is drained into the water holding barrel (2) for rinsing, the water treatment process is circulated until the rinsing ends, and the water is drained into the circulated water treatment device to be cleaned through the flocculation treatment unit and the filtering unit and is finally drained out.

## Patentansprüche

1. Waschmaschine mit Funktion zur Behandlung von umgewälztem Wasser, die einen Wasseraufnahmebehälter (2), eine in dem Wasseraufnahmebehälter (2) angeordnete Waschkonstruktion und eine Vorrichtung zur Behandlung von umgewälztem Wasser umfasst, die unter dem Wasseraufnahmebehälter (2) angeordnet ist, wobei die Vorrichtung zur Behandlung von umgewälztem Wasser eine Flockungsbehandlungseinheit und eine Filtereinheit umfasst, **dadurch gekennzeichnet, dass**
die Flockungsbehandlungseinheit einen Flockungsbehälter (10) umfasst, der in Verbindung mit dem Wasseraufnahmebehälter (2) und einer Flockungsmittel-Abgabevorrichtung (11) steht, durch die Flockungsmittel-Abgabevorrichttung (11) hindurch ein Flockungsmittel in den Flockungsbehälter (10) abgegeben wird, und der Wasseraufnahmebehälter (2) über ein Auslassregelventil (17) Wasser in den Flockungsbehälter (10) zur Flockungsbehandlung ableitet; und
die Filtereinheit einen Filterbehälter (12) und ein in dem Filterbehälter (12) angeordnetes Sieb (13) umfasst, wobei der Innenraum des Filterbehälters (12) durch das Sieb (13) in einen ersten Teil und einen zweiten Teil unterteilt ist, der erste Teil mit dem Flockungsbehälter (10) über ein Verbindungsrohr (14) in Verbindung steht und der zweite Teil mit dem Wasseraufnahmebehälter (2) über eine Konstruktion für umgewälztes Wasser in Verbindung steht, und das Wasser nach der Flockungsbehandlung im Flockungsbehälter (10) gefiltert und anschließend zur Wiederverwendung wieder in den Wasseraufnahmebehälter (2) abgeleitet wird;
wobei die Konstruktion für umgewälztes Wasser von der Vorrichtung zur Behandlung von umgewälztem Wasser umfasst ist und das Wasser nach der Flockung und Filterung zwecks Wiederverwertung in den Wasseraufnahmebehälter (2) ableitet.

2. Waschmaschine mit Funktion zur Behandlung von umgewälztem Wasser nach Anspruch 1, wobei die Vorrichtung zur Behandlung von umgewälztem Wasser eine Ableitkonstruktion umfasst, die am Ende der Arbeit das Wasser aus der Waschmaschine leitet.

3. Waschmaschine mit Funktion zur Behandlung von umgewälztem Wasser nach Anspruch 1, wobei ein unterer Abschnitt des Flockungsbehälters (10) und ein unterer Abschnitt des Filterbehälters (12) über eine Auf/Zu-Steuerungskonstruktion (22) eine Verbindung/Trennung zwischen den beiden Behältern steuert, ein oberer Abschnitt des Flockungsbehälters (10) mit einem Wasserauslauf am Boden des Wasseraufnahmebehälters (2) über ein Wasserführungsrohr (16) in Verbindung steht und das Wasserführungsrohr (16) mit dem Auslassregelventil (17) versehen ist.

4. Waschmaschine mit Funktion zur Behandlung von umgewälztem Wasser nach Anspruch 3, wobei der Boden des Flockungsbehälters (10) mit der Ableitkonstruktion versehen ist, die Wasser aus der Waschmaschine leitet, die eine Ablauföffnung des Flockungsbehälters (10), ein Ablaufrohr (18) und ein Ablaufventil (19) in Verbindung mit der Ablauföffnung umfasst.

5. Waschmaschine mit Funktion zur Behandlung von umgewälztem Wasser nach Anspruch 3, wobei der Filterbehälter (12) mit der Konstruktion für umgewälztes Wasser versehen ist, die gefiltertes Wasser in den Wasseraufnahmebehälter (2) ableitet, die einen Ablauf des Filterbehälters für umgewälztes Wasser, eine Umwälzpumpe (20) und ein Umwälzrohr (21) aufweist, das Umwälzrohr (21) mit dem Wasseraufnahmebehälter (2) in Verbindung steht, das Sieb (13) den Innenraum des Filterbehälters (12) in zwei Teile unterteilt, die der erste Teil und zweite Teil sind, wobei der erste Teil mit dem Flockungsbehälter (10) in Verbindung steht und der zweite Teil über die Konstruktion für umgewälztes Wasser mit dem Wasseraufnahmebehälter (2) in Verbindung steht.

6. Waschmaschine mit Funktion zur Behandlung von umgewälztem Wasser nach Anspruch 1, wobei der Flockungsbehälter (10) über dem Filterbehälter (12) angeordnet ist, der Boden des Flockungsbehälters (10) mit dem oberen Abschnitt des Filterbehälters (12) über das Verbindungsrohr (14) in Verbindung steht, das Verbindungsrohr (14) mit einem Absperrventil (15) versehen ist, der obere Abschnitt des Flockungsbehälters (10) mit einem Wasserauslauf am Boden des Wasseraufnahmebehälters (2) über ein Wasserführungsrohr (16) in Verbindung steht, und das Wasserführungsrohr (16) mit dem Auslassregelventil (17) versehen ist.

7. Waschmaschine mit Funktion zur Behandlung von umgewälztem Wasser nach Anspruch 6, wobei der Boden des Filterbehälters (12) mit einer Ableitkonstruktion, die Wasser aus der Waschmaschine leitet, und der Konstruktion für umgewälztes Wasser versehen ist, die gefiltertes Wasser in den Wasseraufnahmebehälter (2) ableitet, das Sieb (13) den Innenraum des Filterbehälters (12) in zwei Teile unterteilt, die der erste Teil und zweite Teil sind, wobei der erste Teil mit dem Verbindungsrohr (14) beziehungsweise der Ableitkonstruktion in Verbindung steht und der zweite Teil mit dem Wasseraufnahmebehälter (2) über die Konstruktion für umgewälztes Wasser in Verbindung steht.

8. Waschmaschine mit Funktion zur Behandlung von umgewälztem Wasser nach einem der Ansprüche 1 bis 7, wobei die Flockungsbehandlungseinheit ferner eine Flockungsrührkonstruktion umfasst, die hauptsächlich aus einem Rührmotor (23), einer Rührwelle (24) und einem Rührflügelrad (25) besteht, der Rührmotor (23) außerhalb des Flockungsbehälters (10) angeordnet ist, die Rührwelle (24) vom Rührmotor (23) aus bis zum Innenraum des Flockungsbehälters (10) verläuft, und das Rührflügelrad (25) an der Rührwelle (24) in dem Flockungsbehälter (10) angeordnet ist.

9. Waschmaschine mit Funktion zur Behandlung von umgewälztem Wasser nach einem der Ansprüche 1 bis 7, wobei das Sieb (13) eine röhrenförmige Konstruktion ist und drehbar in dem Filterbehälter (12) angeordnet ist, ein Ende angetrieben ist und über einen Reinigungsmotor (26) verbunden ist und das andere das gefilterte Wasser über eine Drehverbindung (27) in den Wasseraufnahmebehälter (2) ableitet.

10. Steuerungsverfahren für die Waschmaschine nach einem der Ansprüche 1 bis 9, **dadurch gekennzeichnet, dass** nach Beendigung des Waschvorgangs Wasser in die Vorrichtung zur Behandlung von umgewälztem Wasser abgeleitet wird, nacheinander durch die Flockungsbehandlungseinheit zur Flockungsbehandlung und die Filtereinheit zum Filtern läuft und anschließend zum Spülen in den Wasseraufnahmebehälter (2) abgeleitet wird, der Wasserbehandlungsvorgang bis zur Beendigung des Spülvorgangs weitergeführt wird und das Wasser in die Vorrichtung zur Behandlung von umgewälztem Wasser abgeleitet wird, damit es durch die Flockungsbehandlungseinheit und die Filtereinheit gereinigt wird, und schließlich abgelassen wird.

## Revendications

1. Machine à laver dotée d'une fonction de traitement d'eau de circulation, comprenant une cuve de retenue d'eau (2), une structure de lavage disposée dans la cuve de retenue d'eau (2) et un dispositif de traitement d'eau de circulation disposé sous la cuve de retenue d'eau (2), le dispositif de traitement d'eau de circulation comprenant une unité de traitement de floculation et une unité de filtration, **caractérisé en ce que**
l'unité de traitement de floculation comprend un conteneur de floculation (10) en communication avec la cuve de retenue d'eau (2) et un doseur d'agent de floculation (11) par lequel un agent de floculation est déversé dans le conteneur de floculation (10), et la cuve de retenue d'eau (2) évacue l'eau via une vanne de commande de sortie (17) vers le conteneur de floculation (10) pour le traitement de floculation ; et l'unité de filtration comprend un conteneur de filtration (12) et un tamis (13) disposé dans le conteneur de filtration (12), l'intérieur du conteneur de filtration (12) est divisé en une première partie et en une deuxième partie par le tamis (13), la première partie est en communication avec le conteneur de floculation (10) via un conduit de connexion (14), et la deuxième partie est en communication avec la cuve de retenue d'eau (2) via une structure d'eau de circulation, et l'eau est filtrée après traitement de floculation dans le conteneur de floculation (10) puis ré-évacuée vers la cuve de retenue d'eau (2) pour réutilisation ;
la structure d'eau de circulation étant comprise dans le dispositif de traitement d'eau de circulation et refoulant l'eau après floculation et filtration vers la cuve de retenue d'eau (2) pour recyclage.

2. Machine à laver dotée d'une fonction de traitement d'eau de circulation selon la revendication 1, où le dispositif de traitement d'eau de circulation comprend une structure de vidange qui évacue l'eau en dehors de la machine à laver à l'issue du fonctionnement.

3. Machine à laver dotée d'une fonction de traitement d'eau de circulation selon la revendication 1, où une partie inférieure du conteneur de floculation (10) et une partie inférieure du conteneur de filtration (12) commandent la connexion/déconnexion entre les deux conteneurs via une structure de commande ON/OFF (22), une partie supérieure du conteneur de floculation (10) est en communication avec une sortie d'eau au fond de la cuve de retenue d'eau (2) via un conduit de guidage d'eau (16), et le conduit de guidage d'eau (16) est pourvu de la vanne de commande de sortie (17).

4. Machine à laver dotée d'une fonction de traitement d'eau de circulation selon la revendication 3, où le fond du conteneur de floculation (10) est pourvu de la structure de vidange qui évacue l'eau vers l'extérieur de la machine à laver, comprenant une sortie d'évacuation du conteneur de floculation (10), un conduit d'évacuation (18) et une vanne d'évacuation (19) en communication avec la sortie d'évacuation.

5. Machine à laver dotée d'une fonction de traitement d'eau de circulation selon la revendication 3, où le conteneur de filtration (12) est pourvu de la structure d'eau de circulation qui refoule l'eau filtrée vers la cuve de retenue d'eau (2), comprenant une sortie d'eau de circulation du conteneur de filtration, une pompe de circulation (20) et un conduit de circulation (21), le conduit de circulation (21) est en communication avec la cuve de retenue d'eau (2), le tamis (13) divise l'intérieur du conteneur de filtration (12) en deux parties qui forment la première partie et la deuxième partie, la première partie étant en communication avec le conteneur de floculation (10), et la deuxième partie étant en communication avec la cuve de retenue d'eau (2) via la structure d'eau de circulation.

6. Machine à laver dotée d'une fonction de traitement d'eau de circulation selon la revendication 1, où le conteneur de floculation (10) est disposé au-dessus du conteneur de filtration (12), le fond du conteneur de floculation (10) est en communication avec la partie supérieure du conteneur de filtration (12) via le conduit de connexion (14), le conduit de connexion (14) est pourvu d'une vanne d'arrêt (15), la partie supérieure du conteneur de floculation (10) est en communication avec une sortie d'eau au fond de la cuve de retenue d'eau (2) via un conduit de guidage d'eau (16), et le conduit de guidage d'eau (16) est pourvu de la vanne de commande de sortie (17).

7. Machine à laver dotée d'une fonction de traitement d'eau de circulation selon la revendication 6, où le fond du conteneur de filtration (12) est pourvu d'une structure de vidange qui évacue l'eau vers l'extérieur de la machine à laver et de la structure d'eau de circulation refoulant l'eau filtrée vers la cuve de retenue d'eau (2), le tamis (13) divise l'intérieur du conteneur de filtration (12) en deux parties formant la première partie et la deuxième partie, la première partie étant en communication respective avec le conduit de connexion (14) et la structure de vidange, et la deuxième partie étant en communication avec la cuve de retenue d'eau (2) via la structure d'eau de circulation.

8. Machine à laver dotée d'une fonction de traitement d'eau de circulation selon l'une des revendications 1 à 7, où l'unité de traitement de floculation comprend en outre une structure agitatrice de floculation composée principalement d'un moteur d'agitation (23), d'un arbre d'agitation (24) et d'un rotor d'agitation (25), le moteur d'agitation (23) est disposé à l'extérieur du conteneur de floculation (10), l'arbre d'agitation (24) s'étend vers l'intérieur du conteneur de floculation (10) depuis le moteur d'agitation (23), et le rotor d'agitation (25) est disposé sur l'arbre d'agitation (24) à l'intérieur du conteneur de floculation (10).

9. Machine à laver dotée d'une fonction de traitement d'eau de circulation selon l'une des revendications 1 à 7, où le tamis (13) est une structure tubulaire et rotative disposée dans le conteneur de filtration (12), dont une extrémité est entraînée par un moteur de lavage (26) auquel elle est raccordée, et dont l'autre extrémité refoule l'eau filtrée dans la cuve de retenue d'eau (2) via un joint rotatif (27).

10. Procédé de commande de la machine à laver selon l'une des revendications 1 à 9, **caractérisé en ce qu'**à l'issue du lavage, l'eau est refoulée vers le dispositif de traitement d'eau de circulation, traverse l'unité de traitement de floculation pour le traitement de floculation et l'unité de filtration pour la séquence de filtration, avant d'être refoulée dans la cuve de retenue d'eau (2) pour rinçage, le processus de traitement d'eau est répété jusqu'à la fin du rinçage, et l'eau est refoulée vers le dispositif de traitement d'eau de circulation pour être nettoyée par l'unité de traitement de floculation et l'unité de filtration avant d'être finalement évacuée.
